# FASCICULE DE BREVET EUROPEEN

(11) **EP 3 627 191 B1**
(45) Date de publication et mention de la délivrance du brevet: **27.11.2024**
(21) Numéro de dépôt: 19196856.9
(22) Date de dépôt: 12.09.2019
(51) Int. Cl.: G01V 8/12, E03D 5/10, E03C 1/05, G05D 7/06

(54) **SYSTÈME DE COMMANDE À DÉCLENCHEMENT PAR DÉTECTION DE PRÉSENCE**
KONTROLLSYSTEM AKTIVIERT DURCH PRÄSENZERKENNUNG
CONTROL SYSTEM TRIGGERED BY A PRESENCE SENSOR

(30) Priorité: 19.09.2018 FR 1858458
(43) Date de publication de la demande: 25.03.2020
(73) Titulaire: Delabie, 80130 Friville Escarbotin (FR)
(72) Inventeur: BOUVIER, Freddy, 80130 Friville Escarbotin (FR)
(74) Mandataire: Cabinet Chaillot

(56) Documents cités:
- EP-A1- 0 948 242
- WO-A1-2005/056938
- JP-A- 2010 169 909
- US-A- 5 651 384
- US-A1- 2008 100 185
- US-A1- 2012 174 306
- US-A1- 2017 167 631
- US-A1- 2017 335 553

## Description

### Domaine technique

L'invention se rapporte au domaine des systèmes de commande à déclenchement par détection de mouvement et plus particulièrement à un appareil pour un local à usage sanitaire incorporant un tel système de commande.

### Arrière-plan technologique

Les sanitaires publics utilisent des systèmes de déclenchement automatisés pour des raisons d'hygiène et d'économie. FR2706504 dévoile un dispositif de robinetterie avec détection de présence qui permet d'ouvrir une électrovanne lorsqu'une présence d'utilisateur est détectée. FR3002247 montre comment améliorer le rinçage d'un urinoir en utilisant un détecteur de présence. Il existe de nombreux autres exemples d'appareils sanitaires disposant de ce type déclenchement automatique avec détection de présence tels que : robinet de lavabo, de douche, d'urinoir ou de toilette, distributeur de savon, sèche main.

En outre, parmi les détecteurs de présence, les plus courants sont des détecteurs optiques et notamment des détecteurs à infrarouge (IR). Un problème des détecteurs à IR est lié à la fausse détection. FR2956908 décrit un détecteur infrarouge amélioré afin de réduire les fausses détections et de présenter une certaine directivité dans la détection. Ce type de détecteur présente l'avantage d'être utilisable pour tout type d'application visant à actionner un système par détection de présence. Un faisceau IR pulsé est envoyé, le faisceau est réfléchi par un objet, un capteur mesure la lumière IR pulsée réfléchie, cette lumière IR reçue est comparée à un seuil qui permet de déterminer s'il y a présence ou non pour déclencher une action.

Les capteurs IR de ce type peuvent être perturbés par la présence en arrière-plan d'un objet fortement réfléchissant, par exemple en inox ou en céramique. Ces fortes réflexions peuvent créer des fausses détections. Egalement, des sources lumineuses extérieures qui peuvent « éblouir » les capteurs IR.

US6250601 remédie à ces problèmes de détection en utilisant un système de radar plus précis qui permet de détecter une présence par mesure de distance sur le principe du « temps de vol » qui consiste à mesurer combien de temps met une onde pour revenir sur le détecteur. Ce document indique qu'il est également possible d'utiliser de la télémétrie basée sur de la lumière visible ou infrarouge.

Pour les sanitaires publics, dans certains cas, une alimentation sur pile est préférée afin d'éviter l'installation d'un câblage électrique.

FR2985570 un dispositif de détection de présence qui réalise une mesure de distance à l'aide d'un faisceau infrarouge selon le principe de mesure de temps de retour. Ce type de détecteur a pour inconvénient une consommation énergétique élevée qui limite l'autonomie de système de commande lorsqu'il utilise une pile, ce qui rend impossible l'utilisation dans les lieux publics à haute fréquentation.

Les documents US5651384A, US2017/167631A1, EP0948242A1, US2008/100185A1, WO2005/056938A1, US2017/335553A1, JP2010169909A et US2012174306A1 décrivent des dispositifs de détection de présence selon l'état antérieur de la technique.

En particulier, le document US5651384A divulgue un circuit de détection de proximité infrarouge destiné à être utilisé avec des appareils sanitaires pour commander l'écoulement d'eau, le circuit comprenant un capteur infrarouge et un capteur de lumière ambiante, où la fréquence de mesure du capteur infrarouge est modifiée en fonction de la mesure du capteur de lumière. Cependant, étant donné que le capteur infrarouge et le capteur de lumière ambiante fonctionnent simultanément, la consommation énergétique de ce circuit est élevée. En outre, ce circuit ne permet pas de détecter une variation négative de la luminosité.

Le document JP2010169909A divulgue un équipement électrique comprenant un capteur infrarouge et un capteur de lumière ambiante, où la variation de l'intensité lumineuse détectée par le capteur de lumière ambiante est comparée à un seuil prédéterminé, et où la fréquence de mesure du capteur infrarouge est modifiée en fonction de la luminosité mesurée. Cependant, cet équipement ne permet pas de détecter une variation négative de la luminosité. En outre, le capteur infrarouge est actionné à une fréquence de fonctionnement prédéfinie, ce qui entraîne une consommation énergétique élevée.

Le document US2012174306A1 divulgue un système de détection automatique destiné à être utilisé avec un appareil sanitaire et comprenant uniquement un capteur de lumière, où la variation de l'intensité lumineuse détectée par le capteur de lumière est comparée à un seuil prédéterminé. Cependant, ce système ne divulgue pas l'association d'un capteur infrarouge et d'un capteur de lumière, et ne permet également pas de détecter une variation négative de la luminosité.

### Résumé

Selon l'invention, il est proposé un système de commande à double détection qui permet de s'affranchir des problèmes de fausse détection tout en permettant une consommation d'énergie réduite.

L'invention a pour objet un système de commande électronique tel que décrit dans la revendication 1.

L'invention fournit un système de commande électronique qui comporte un capteur télémétrique combiné à un capteur de lumière et à un circuit de commande pour commander un actionneur, par exemple pour ouvrir et fermer une électrovanne pour robinetterie sanitaire ou mettre en marche ou arrêter un moteur tel qu'un moteur de pompe ou d'un ventilateur pour sèche main ou tout autre mécanisme, en cas de détection de présence d'un utilisateur. Le circuit de commande, tel qu'un microcontrôleur ou un FPGA (acronyme anglais pour réseau de portes programmable), est configuré pour effectuer de façon cyclique une mesure de l'intensité de la lumière reçue par le capteur de lumière. En cas de mesure d'une intensité lumineuse inférieure à un premier seuil prédéterminé, par exemple correspondant à l'intensité lumineuse d'une veilleuse de chemin de ronde, la fréquence de mesure de l'intensité de lumière ambiante est fixée à une première fréquence par exemple 2 à 5 s et l'ensemble du système de commande est alors mis en sommeil entre deux mesures de l'intensité lumineuse.

L'utilisation du premier seuil de luminosité permet de passer dans un mode sommeil ou mode de fonctionnement « nuit » qui permet de fortement réduire la consommation du système de commande.

Dans le cas où le circuit de commande relève une mesure de l'intensité lumineuse dépassant un deuxième seuil prédéterminé alors le circuit de commande déclenche une ou des mesures successives de l'intensité lumineuse à une deuxième fréquence plus rapide, autrement dit, plus élevée que la première fréquence, par exemple toutes les 0,4 sec. Le deuxième seuil prédéterminé peut être supérieur au premier seuil prédéterminé.

Dans le cas où le circuit de commande relève une variation de l'intensité lumineuse, en plus ou en moins, au-delà d'un écart prédéterminé, par exemple 5 lux, il active le capteur télémétrique.

Le circuit de commande est configuré pour déclencher un actionneur, par exemple pour ouvrir une électrovanne ou mettre en marche un moteur, lorsque la mesure effectuée par le capteur télémétrique correspond à une condition de distance prédéterminée, par exemple correspondant à l'approche de la main d'un utilisateur.

Le circuit de commande est configuré pour remettre en sommeil le système de commande si la mesure effectuée par le capteur télémétrique ne correspond pas à ladite condition de distance prédéterminée.

Le capteur télémétrique peut être un capteur infrarouge laser.

Ainsi le circuit de commande effectue cycliquement une mesure de lumière ambiante et le capteur télémétrique n'étant utilisé que pour infirmer ou confirmer la pré-détection, sa consommation électrique s'en trouve fortement réduite car il peut rester en sommeil la plupart du temps.

Un tel système de commande peut être employé pour actionner de nombreux types d'appareils sanitaires disposant d'un déclenchement automatique avec détection de présence tels que : robinet de lavabo, de douche, d'urinoir ou de toilette, distributeur de savon, sèche main, sèche-cheveux. Aussi, l'actionneur peut être un simple relais mettant sous tension un appareil électrique branché sur secteur.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- Les figures 1 et 2 sont des exemples d'appareils pour sanitaire dans lesquels des modes de réalisation de l'invention sont utilisés,
- La figure 3 montre un schéma synoptique d'un détecteur de présence selon un mode particulier de réalisation de l'invention,
- La figure 4 montre un organigramme de fonctionnement du détecteur de la figure 3 selon un mode de fonctionnement exemplaire,
- La figure 5 monte un organigramme de fonctionnement du détecteur de la figure 3 selon un mode de réalisation de la présente invention.

### Description détaillée de modes de réalisation

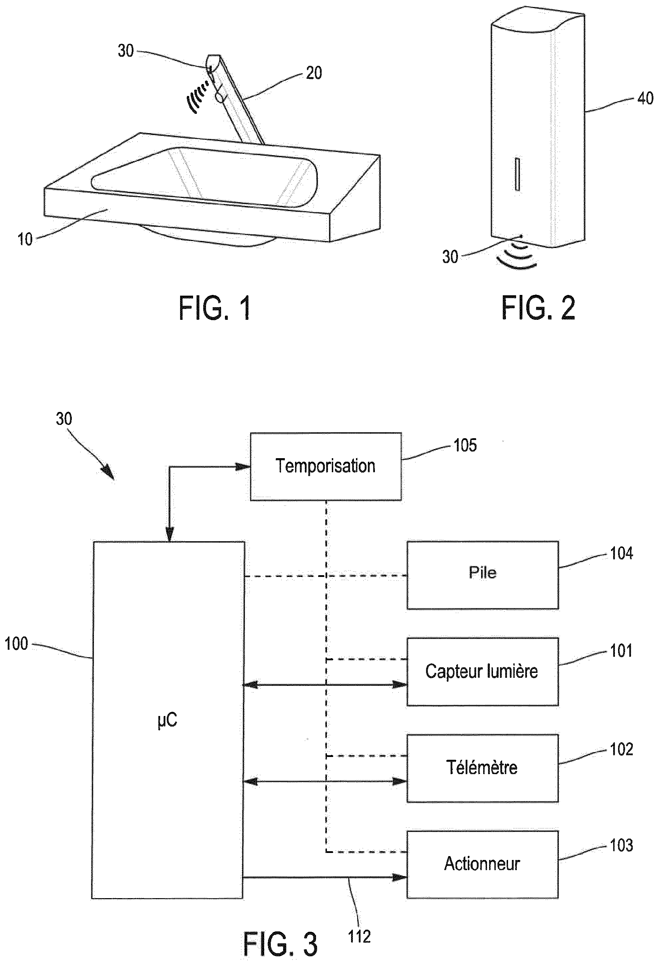

La figure 1 représente un exemple d'élément sanitaire incorporant un système de commande. L'élément sanitaire de la figure 1 représente un lavabo 10 muni d'un robinet 20 incorporant un système de commande automatique 30 par détection de présence.

La figure 2 représente un autre exemple d'appareil pour un local à usage sanitaire incorporant un système de commande. L'appareil pour sanitaire de la figure 2 représente un distributeur automatique de savon 40 incorporant également le système de commande automatique 30 par détection de présence.

Le système de commande automatique 30 est détaillé sur la figure 3 et il comporte un circuit de commande 100, un capteur de lumière 101, un capteur télémétrique 102, au moins un actionneur 103, une pile 104 et un circuit de temporisation 105. Dans un exemple préféré, le circuit de commande 100 est principalement réalisé à l'aide d'un microcontrôleur.

Le capteur de lumière 101 peut être réalisé de différentes manières. Selon un mode de réalisation préféré, le capteur de lumière 101 est préférablement intégré avec le capteur télémétrique 102. Il fournit un signal analogique proportionnel au niveau de luminosité ambiante qu'il reçoit. Un utilisateur s'approchant du capteur va normalement créer un ombre qui se traduira par une variation de lumière. Le circuit de commande 100 reçoit un signal qui est numérisé afin d'être ensuite analysé pour déterminer si une présence est détectée. Ce type de détection est assez peu fiable car fortement sensible aux fausses détections mais présente l'intérêt de disposer d'une consommation d'énergie très faible.

Le capteur télémétrique 102 est par exemple un télémètre infrarouge laser disposant d'un émetteur IR et d'un récepteur IR. Le capteur télémétrique réalise une mesure du temps de vol entre l'émission de la lumière infrarouge par l'émetteur et la réception par le récepteur après réflexion sur l'objet situé en face du capteur télémétrique. Le temps de vol est ensuite converti en distance par le capteur 102. L'homme du métier pourra utiliser un capteur télémétrique infrarouge connu, par exemple tel que celui décrit dans FR 2 985 570.

La nature de l'actionneur 103 dépend de l'appareil dans lequel le système de commande est intégré. Dans le cas du robinet 20 pour lavabo 10, l'actionneur 103 est par exemple une électrovanne montée sur l'arrivée d'eau. Dans le cas d'un distributeur de savon 40, l'actionneur 103 est par exemple le moteur d'une pompe qui permet de distribuer du savon liquide.

La pile 104 assure l'alimentation des différents éléments du système de commande automatique comme indiqué par le réseau de trait interrompus sur la figure 3. En effet, cette pile est un élément optionnel qui peut être remplacé par n'importe quel circuit d'alimentation si le système de commande est raccordé au secteur.

Le circuit de temporisation 105 est représenté de manière indépendante mais il peut être intégré au circuit de commande 100. Ce circuit de temporisation 105 sert à cadencer le circuit de commande 100. Notamment ce circuit de temporisation 105 va déclencher périodiquement une mesure de lumière afin d'effectuer un pré-détection de présence. Le circuit de temporisation 105 est relié au circuit de commande 100 pour, d'une part, recevoir une valeur de temporisation T et, d'autre part, fournir une interruption au circuit de commande chaque fois que la valeur de temporisation T s'est écoulée.

Le circuit de temporisation 105 réveille le circuit de commande 100 de manière périodique et remet celui-ci en sommeil après chaque mesure.

Les mises en sommeil et les activations des capteurs de lumière 101 et/ou de télémétrie 102 sont contrôlées par le circuit de commande 100. Ainsi, le circuit de commande peut réveiller lesdits capteurs 101 et/ou 102 chaque fois qu'une détection est prévue par son programme intégré pour ensuite remettre en sommeil les capteurs de lumière 101 et/ou de télémétrie 102 après chaque détection. Le fait de mettre en sommeil les capteurs permet de réduire considérablement la consommation électrique.

L'actionneur 103 est contrôlé par un signal de commande 112 du circuit de commande 100.

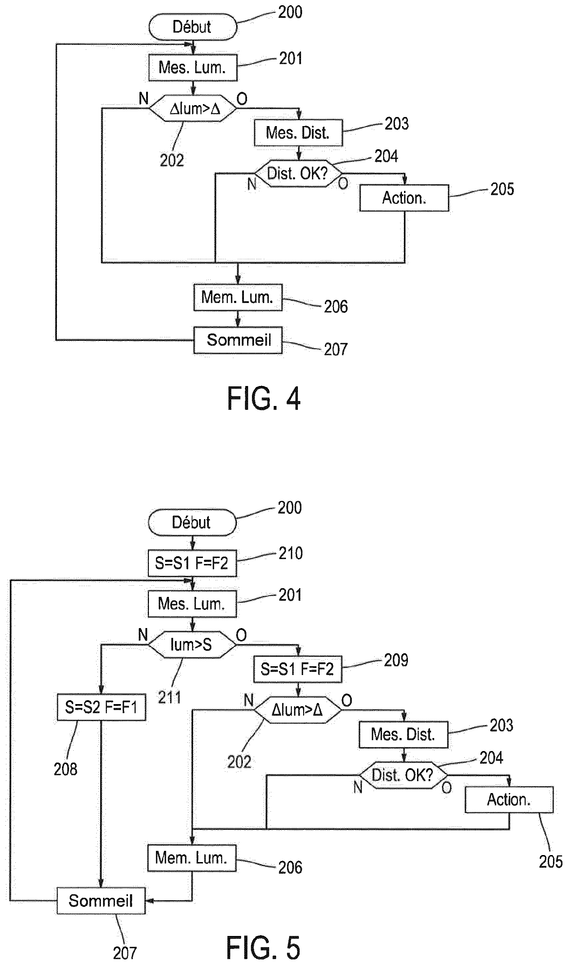

Le système de commande automatique 30 ayant été décrit de manière structurelle, son fonctionnement selon un mode de fonctionnement exemplaire va maintenant être décrit à l'aide l'organigramme de la figure 4.

L'organigramme de la figure 4 représente une boucle de fonctionnement qui est répétée périodiquement à une cadence déterminée par le circuit de temporisation 105. Une première étape 201 correspond à une mesure de lumière ambiante. Le circuit de commande 100 échantillonne une mesure de lumière ambiante fournie par le capteur de lumière 101 et la stocke dans un registre en tant que mesure courante. Le circuit de commande 100 réalise un test 202 en comparant cette mesure courante avec une mesure de lumière ambiante antérieure, mémorisée précédemment, dite mesure mémorisée.

Si le test 202 indique que la valeur absolue de la différence Δlum entre les deux mesures de lumière (mesure courante et mesure mémorisée) est supérieure à un écart prédéfini Δ alors une pré-détection de présence est considérée positive et une post-détection de présence est déclenchée à l'étape 203. Si le test 202 indique que la valeur absolue de la différence Δlum entre les deux mesures de lumière n'est pas supérieure à l'écart Δ, alors le procédé passe directement à une étape de mémorisation 206 pour que la mesure courante devienne la nouvelle mesure mémorisée. La différence Δlum peut être une variation positive ou négative. A titre d'exemple, l'écart Δ peut être fixé à environ 5 lux.

La post-détection commence par l'étape de mesure de distance 203. Le circuit de commande 100 interroge le capteur télémétrique 102. Le capteur télémétrique 102 fournit une mesure de distance au circuit de commande 100. Cette mesure de distance est représentative de la distance entre le capteur télémétrique 102 et l'objet le plus proche situé en face dudit capteur.

Le circuit de commande 100 effectue alors un test 204 au cours duquel il vérifie que la distance satisfait une condition prédéterminée. Si la condition prédéterminée est satisfaite alors une étape 205 d'activation de l'actionneur est réalisée. Si la condition prédéterminée n'est pas satisfaite alors l'étape de mémorisation 206 est réalisée et le circuit de commande 100 est remis en sommeil à l'étape 207 jusqu'au prochain réveil.

La condition prédéterminée dépend du type d'appareil dans lequel le système de commande automatique 30 est incorporé. La condition peut être une condition de distance maximale, qui est satisfaite dès lors que la distance est inférieure à une distance maximale prédéfinie. La condition peut être une condition de distance minimale, qui est satisfaite dès lors que la distance est supérieure à une distance minimale prédéfinie. La condition peut aussi être une condition de plage de distances, qui est satisfaite si la distance se trouve dans une plage de valeurs prédéfinie. Pour un robinet 20, on peut considérer que l'utilisateur doit placer ses mains devant le robinet à une distance du capteur télémétrique comprise par exemple entre 10 et 150 mm. Pour un distributeur de savon la distance maximale peut être plus petite, on peut par exemple considérer que l'utilisateur doit placer ses mains devant le distributeur de savon 40 à une distance du capteur télémétrique comprise entre 20 et 100 mm. De cette manière, on s'affranchit des problèmes de fausse détection ou de saturation liés à la réflexion de l'arrière-plan.

L'étape 205 d'activation de l'actionneur consiste à envoyer à l'actionneur un signal de commande 112 qui active celui-ci. Là aussi le signal de commande 112 peut varier en fonction du type d'actionneur. A titre d'exemple, pour une électrovanne, il s'agit d'une commande d'ouverture pendant une durée prédéterminée, ou pour une durée indéterminée (tant que le signal de commande 112 est actif). Pour un moteur pas-à-pas, la commande peut être de tourner d'un certain angle ou comprendre un certain nombre d'impulsions électriques correspondant à un certain angle de rotation ou à un certain temps d'activité. A l'issue de l'étape 205, on effectue l'étape de mémorisation 206.

L'étape de mémorisation 206 consiste, comme dit plus haut, à remplacer la mesure mémorisée par la dernière mesure, dite mesure courante. A l'étape 207, le circuit de commande est mis en sommeil jusqu'à ce que la temporisation soit écoulée. Alors on retourne à la première étape 201 pour effectuer une nouvelle mesure de luminosité.

Toujours dans un but d'économie d'énergie, il est possible de faire varier la période d'interrogation du capteur de lumière entre un mode de fonctionnement de type jour et un mode de fonctionnement de type nuit. Avantageusement, on diminue la fréquence d'interrogation du capteur de lumière lorsque l'on détecte une très faible luminosité (mode nuit).

L'organigramme de la figure 5 illustre un mode de réalisation de la présente invention. Les étapes communes avec l'organigramme de la figure 4 portent la même référence et sont identiques à celles précédemment décrites. La transformation de l'organigramme consiste en l'ajout d'un test supplémentaire 207 après la première étape 201 au cours duquel la mesure courante de lumière que l'on vient de mémoriser est comparée à un seuil S prédéfini. Si la mesure de lumière est inférieure au seuil S alors on fixe la fréquence d'interrogation à une première fréquence F1 au cours d'une étape 208 (mode nuit) puis on passe directement à l'étape de mise en sommeil 207. Cette première fréquence F1 correspond à une première valeur de temporisation pour le circuit de temporisation 105. Si la mesure de lumière est supérieure au seuil S alors on fixe la fréquence d'interrogation à une deuxième fréquence F2 au cours d'une étape 209 (mode jour) puis on passe au test 202. Cette deuxième fréquence correspond à une deuxième valeur de temporisation pour le circuit de temporisation 105.

La première fréquence F1 est peu élevée et correspond à un mode d'économie d'énergie, dit mode nuit. La deuxième fréquence plus élevée que la première fréquence correspond à un mode jour. A titre d'exemple la première temporisation peut être comprise entre 2 et 5 secondes et la deuxième fréquence correspond à une interrogation du capteur de lumière beaucoup plus élevée, par exemple 2 à 3 fois par seconde. Dans un exemple, le seuil S est par exemple égal à 2 lux ce qui correspond à la lumière d'une veilleuse utilisée pour permettre des rondes de nuit.

Afin d'éviter une instabilité du système, le seuil S est décomposé en deux seuils S1 et S2 réalisant ainsi un cycle d'hystérésis avec S2 supérieur à S1. Lors de l'étape 208, on fixera la valeur du seuil à S2. Ainsi, l'intensité lumineuse mesurée doit devenir supérieure au seuil le plus élevé pour que le circuit de commande 100 passe du mode nuit au mode jour. Lors de l'étape de l'étape 209, on fixera la valeur du seuil à S1. Ainsi, l'intensité lumineuse mesurée doit devenir inférieure au seuil le plus faible pour que le circuit de commande 100 passe du mode jour au mode nuit.

Une étape d'initialisation 210 est réalisée avant la toute première exécution de la première étape 201 pour fixer la valeur initiale de la fréquence d'interrogation, à la deuxième fréquence F2 et pour fixer la valeur du seuil à S1.

De nombreuses variantes sont réalisables à partir des exemples décrits précédemment.

Le capteur de lumière 101 décrit ci-dessus donne une information proportionnelle à la luminosité ambiante. Toutefois de nombreuses variantes sont possibles pour cet élément.

Le capteur télémétrique 102 peut être réalisé de différentes manières. Toute source de lumière cohérente ou incohérente aussi bien dans le spectre visible que dans les UV ou l'IR peut être utilisée avec le récepteur approprié pour mesurer le temps de propagation du faisceau lumineux.

Dans une variante le circuit de commande utilise un circuit programmable différent d'un microcontrôleur, par exemple un FPGA.

De même la condition prédéterminée sur la distance peut être une condition plus complexe qu'une simple vérification de distance. A titre d'exemple, pour le déclenchement d'une chasse d'eau de WC ou d'un rinçage d'urinoir à l'arrivée et/ou au départ d'un utilisateur, le dispositif devra d'abord détecter la présence de l'utilisateur puis détecter son éloignement. Dans ce cas plusieurs conditions successives devront être vérifiées avant de déclencher l'actionneur.

## Revendications

1. Système de commande électronique (30) comportant un capteur télémétrique (102) combiné à un capteur de lumière (101) et à un circuit de commande (100) pour commander un actionneur (103), par exemple pour ouvrir et fermer une électrovanne pour robinetterie sanitaire ou mettre en marche ou arrêter un moteur tel qu'un moteur de pompe ou tout autre mécanisme, en cas de détection de présence d'un utilisateur, dans lequel le circuit de commande (100), tel qu'un microcontrôleur ou un FPGA, est configuré pour :
- fixer (210) la valeur initiale d'une fréquence d'interrogation à une deuxième fréquence prédéterminée (F2) correspondant à un mode jour ;
- fixer (210) la valeur initiale d'un seuil (S) d'intensité lumineuse à un premier seuil prédéterminé (S1), par exemple correspondant à l'intensité lumineuse d'une veilleuse de chemin de ronde ;
- effectuer (201) de façon cyclique à la fréquence d'interrogation une mesure de l'intensité de la lumière reçue par le capteur de lumière (101) et stocker la mesure de l'intensité de la lumière dans un registre en tant que mesure d'intensité lumineuse courante ;
en cas de mesure (211) d'intensité lumineuse courante inférieure au seuil (S) d'intensité lumineuse :
- fixer (208) la fréquence d'interrogation à une première fréquence prédéterminée (F1) correspondant à un mode nuit, la deuxième fréquence (F2) étant plus élevée que la première fréquence (F1) ;
- fixer (208) le seuil (S) d'intensité lumineuse a un deuxième seuil prédéterminé (S2), le deuxième seuil (S2) étant plus élevé que le premier seuil (S1) ; et
- mettre en sommeil (207) le capteur de lumière (101) et le capteur télémétrique (102) entre deux mesures de l'intensité lumineuse ;
en cas de mesure d'intensité lumineuse courante dépassant le seuil (S) d'intensité lumineuse :
- fixer (209) la fréquence d'interrogation à la deuxième fréquence (F2) ;
- fixer (209) le seuil (S) d'intensité lumineuse au premier seuil prédéterminé (S1) ;
- réaliser un test (202) en comparant la mesure de l'intensité lumineuse courante avec une mesure de l'intensité lumineuse antérieure, mémorisée précédemment ;
- dans le cas où le circuit de commande (100) relève (202) une valeur absolue de la différence (Δlum) entre la mesure de l'intensité lumineuse courante et la mesure de l'intensité lumineuse antérieure, en plus ou en moins, au-delà d'un écart prédéterminé (Δ), activer (203) le capteur télémétrique (102) ;
- interroger (203) le capteur télémétrique (102) et acquérir du capteur télémétrique (102) une mesure de distance ;
- si la mesure de distance effectuée par le capteur télémétrique (102) correspond à une condition de distance prédéterminée (204), par exemple correspondant à l'approche de la main d'un utilisateur, envoyer (205) à l'actionneur (103) un signal d'activation, par exemple pour ouvrir une électrovanne ou mettre en marche un moteur ; et
- si la mesure de distance effectuée par le capteur télémétrique (102) ne correspond pas à ladite condition de distance prédéterminée (204), remettre en sommeil (207) le capteur de lumière (101) et le capteur télémétrique (102) ;
- mémoriser (206) la mesure de l'intensité lumineuse courante comme la nouvelle mesure de l'intensité lumineuse antérieure.

2. Système de commande électronique selon la revendication 1, **caractérisé en ce que** le capteur télémétrique (102) est un capteur infrarouge laser.

## Patentansprüche

1. - Elektronisches Steuersystem (30), umfassend einen Telemetriesensor (102) in Kombination mit einem Lichtsensor (101) und einer Steuerschaltung (100) zum Steuern eines Aktuators (103), beispielsweise zum Öffnen und Schließen eines Magnetventils für Sanitärarmaturen oder zum Ein- und Ausschalten eines Motors, wie beispielsweise eines Pumpenmotors oder eines anderen Mechanismus, wenn die Anwesenheit eines Benutzers erkannt wird, wobei die Steuerschaltung (100), wie beispielsweise ein Mikrocontroller oder ein FPGA, zu Folgendem konfiguriert ist:
- Festlegen (210) des Anfangswerts einer Abfragefrequenz auf eine zweite vorbestimmte Frequenz (F2), die einem Tagesmodus entspricht;
- Festlegen (210) des Anfangswerts eines Schwellenwerts (S) für Lichtintensität auf einen ersten vorbestimmten Schwellenwert (S1), der z. B. der Lichtintensität eines Nachtlichts für eine Straßenkreuzung entspricht;
- Durchführen (201), zyklisch bei der Abfragefrequenz, einer Messung der Intensität des von dem Lichtsensor (101) empfangenen Lichts und Speichern der Messung der Lichtintensität in einem Register als eine aktuelle Messung der Lichtintensität;
bei Messung (211) einer aktuellen Lichtintensität unter dem Lichtintensitätsschwellenwert (S):
- Festlegen (208) der Abfragefrequenz auf eine erste vorbestimmte Frequenz (F1), die einem Nachtmodus entspricht, wobei die zweite Frequenz (F2) höher ist als die erste Frequenz (F1);
- Festlegen (208) des Schwellenwerts (S) für die Lichtintensität auf einen zweiten vorbestimmten Schwellenwert (S2), wobei der zweite Schwellenwert (S2) höher ist als der erste Schwellenwert (S1); und
- in Standby Versetzen (207) des Lichtsensors (101) und des Telemetriesensors (102) zwischen zwei Messungen der Lichtintensität;
bei Messung einer aktuellen Lichtintensität, die den Schwellenwert (S) für die Lichtintensität überschreitet:
- Festlegen (209) der Abfragefrequenz auf die zweite Frequenz (F2);
- Festlegen (209) des Schwellenwerts (S) für Lichtintensität auf den ersten vorbestimmten Schwellenwert (S1);
- Durchführen eines Tests (202) durch Vergleichen der Messung der aktuellen Lichtintensität mit einer Messung der vorherigen, zuvor gespeicherten Lichtintensität;
- in einem Fall, in dem die Steuerschaltung (100) einen absoluten Wert der Differenz (Δlum) zwischen der Messung der aktuellen Lichtintensität und der Messung der vorherigen Lichtintensität mehr oder weniger über eine vorbestimmte Abweichung (Δ) hinaus erfasst (202), Aktivieren (203) des Telemetriesensors (102);
- Abfragen (203) des Telemetriesensors (102) und Erfassen einer Entfernungsmessung von dem Telemetriesensor (102);
- wenn die von dem Telemetriesensor (102) durchgeführte Entfernungsmessung einer vorbestimmten Entfernungsbedingung (204) entspricht, die beispielsweise der Annäherung der Hand eines Benutzers entspricht, Senden (205) eines Aktivierungssignals an den Aktuator (103), beispielsweise zum Öffnen eines Magnetventils oder zum Starten eines Motors; und
- wenn die von dem Telemetriesensor (102) durchgeführte Entfernungsmessung nicht mit der vorbestimmten Entfernungsbedingung (204) übereinstimmt, erneutes Versetzen in Standby (207) des Lichtsensors (101) und des Telemetriesensors (102);
- Speichern (206) der Messung der aktuellen Lichtintensität als die neue Messung der vorherigen Lichtintensität.

2. - Elektronisches Steuersystem nach Anspruch 1, **dadurch gekennzeichnet, dass** der Telemetriesensor (102) ein Infrarot-Lasersensor ist.

## Claims

1. - An electronic control system (30) comprising a telemetric sensor (102) combined with a light sensor (101) and with a control circuit (100) for controlling an actuator (103), for example for opening and closing a solenoid valve for sanitary fittings or for starting or stopping a motor such as a pump motor or any other mechanism, upon detection of presence of a user, wherein the control circuit (100), such as a microcontroller or a FPGA, is configured to :
- set (210) the initial value of a polling frequency to a second predetermined frequency (F2) corresponding to a day mode ;
- set (210) the initial value of a light intensity threshold (S) to a first predetermined threshold (S1), for example corresponding to the light intensity of a walkway night light ;
- perform (201) cyclically at the polling frequency a measurement of the intensity of the light received by the light sensor (101) and store the measurement of the light intensity into a register as a current light intensity measurement ;
in the event of a current light intensity measurement (211) lower than the light intensity threshold (S):
- set (208) the polling frequency to a first predetermined frequency (F1) corresponding to a night mode, the second frequency (F2) being higher than the first frequency (F1) ;
- set (208) the light intensity threshold (S) to a second predetermined threshold (S2), the second threshold (S2) being higher than the first threshold (S1) ; and
- put into sleep mode (207) the light sensor (101) and the telemetric sensor (102) between two light intensity measurements ;
in the event of a current light intensity measurement higher than the light intensity threshold (S) :
- set (209) the polling frequency to the second frequency (F2) ;
- set (209) the light intensity threshold (S) to the first predetermined threshold (S1) ;
- perform a test (202) by comparing the current light intensity measurement with a previous light intensity measurement, which was previously stored ;
- in the event that the control circuit (100) notices (202) an absolute value of the difference (Δlum) between the current light intensity measurement and the previous light intensity measurement, positively or negatively, beyond a predetermined deviation (Δ), activate (203) the telemetric sensor (102) ;
- poll (203) the telemetric sensor (102) and acquire a distance measurement from the telemetric sensor (102) ;
- if the distance measurement made by the telemetric sensor (102) corresponds to a predetermined distance condition (204), for example corresponding to the approach of a user's hand, send (205) to the actuator (103) an activation signal, for example for opening a solenoid valve or starting a motor ; and
- if the distance measurement made by the telemetric sensor (102) does not correspond to said predetermined distance condition (204), put again into sleep mode (207) the light sensor (101) and the telemetric sensor (102) ;
- store (206) the current light intensity measurement as the new measurement of the previous light intensity.

2. - The electronic control system according to claim 1, **characterised in that** the telemetric sensor (102) is a laser infrared sensor.
